# FASCICULE DE BREVET EUROPEEN

(11) **EP 1 246 431 B1**
(45) Date de publication et mention de la délivrance du brevet: **13.09.2006**
(21) Numéro de dépôt: 02076140.9
(22) Date de dépôt: 19.03.2002
(51) Int. Cl.: H04M 1/23, G06F 3/033, G06F 3/02

(54) **Téléphone comportant un clavier de commande perfectionné.**
Mobilfon mit verbesserter Steuertastatur
Mobile phone with improved control keypad

(30) Priorité: 27.03.2001 FR 0104107
(43) Date de publication de la demande: 02.10.2002
(73) Titulaire: Koninklijke Philips Electronics N.V., 5621 BA Eindhoven (NL)
(72) Inventeur: Jambie, Pascal, 75008 Paris (FR); Lubowicki, Jean-Pierre, 75008 Paris (FR); Richez, Bertrand, 75008 Paris (FR)
(74) Mandataire: Chaffraix, Jean

(56) Documents cités:
- EP-A- 0 802 658
- EP-A- 1 081 922
- DE-A- 10 045 888
- PATENT ABSTRACTS OF JAPAN vol. 2000, no. 04, 31 août 2000 (2000-08-31) & JP 2000 032110 A (HITACHI LTD), 28 janvier 2000 (2000-01-28)
- PATENT ABSTRACTS OF JAPAN vol. 2000, no. 03, 30 mars 2000 (2000-03-30) & JP 11 355414 A (HITACHI LTD), 24 décembre 1999 (1999-12-24)

## Description

L'invention propose un téléphone du type GSM, qui comporte un dispositif de commande constitué notamment d'un clavier de touches mobiles de façon indépendante entre une position de repos et une position d'actionnement, selon une direction sensiblement perpendiculaire à sa surface, l'actionnement individuel des touches permettant de composer une combinaison de caractères alphanumériques, notamment un numéro d'appel de téléphone, ou de commander le déplacement d'un curseur ou le défilement d'un menu sur un écran d'affichage, le clavier comportant au moins deux paires de touches associées multifonctions qui permettent de commander le déplacement du curseur.

De manière générale les téléphones du type mobile sont constitués d'un boîtier dans lequel sont notamment agencés un clavier, un dispositif de commande du déplacement du curseur, ainsi qu'un dispositif d'affichage.

Les touches, aussi appelées boutons-poussoirs du clavier, sont globalement mobiles verticalement entre une position haute de repos et une position enfoncée d'actionnement.

Chaque touche comporte une partie supérieure d'actionnement sur laquelle on peut appliquer un effort d'actionnement ou de commande, et une partie inférieure rigide qui est susceptible de coopérer avec un organe de déclenchement d'un commutateur associé.

Lorsqu'une touche est en position d'actionnement, le commutateur qui lui est associé permet de modifier l'état électrique d'un circuit de commande, notamment du circuit de commande du dispositif d'affichage pour déplacer un curseur sur le dispositif d'affichage et/ou pour faire défiler un menu.

De façon générale, les touches du clavier traversent la face avant ou principale du boîtier, de façon que leurs parties supérieures d'actionnement soient accessibles à l'utilisateur.

Le dispositif d'affichage fournit des informations alphanumériques qui peuvent être très variées, telles que des chiffres, des lettres mais aussi des pictogrammes, des dessins ou des images.

Il est fréquent que les dispositifs d'affichage des téléphones mobiles comportent des pictogrammes ou des caractères qui peuvent être des chiffres et/ou des lettres, répartis sur plusieurs lignes et plusieurs colonnes d'affichage et qui peuvent représenter le libellé d'une fonction du téléphone.

Les téléphones mobiles doivent comporter de plus en plus de fonctions. De façon à les gérer, il est connu d'utiliser des menus du type déroulant dont la complexité augmente avec le nombre de fonctions. La simplicité et la rapidité de la sélection de la fonction désirée est alors une caractéristique importante de l'ergonomie de l'appareil.

Il est alors nécessaire de pouvoir déplacer rapidement et facilement un curseur sur le dispositif d'affichage de façon à pouvoir le positionner sur chacun des caractères, ou sur, ou en vis-à-vis du libellé d'une fonction.

Le déplacement du curseur est aussi appelé "navigation" du curseur sur le dispositif d'affichage.

Ces déplacements sont habituellement obtenus par un dispositif de commande spécifique qui peut être constitué d'une ou plusieurs touches qui coopèrent avec des commutateurs électriques associés et qui modifient le circuit de commande du dispositif d'affichage pour piloter le déplacement du curseur.

Il est connu d'associer une touche à chaque sens de déplacement selon deux directions orthogonales sur le dispositif d'affichage.

Les touches de déplacement peuvent être des touches supplémentaires du clavier, ou des touches voisines de clavier alphanumérique normalisé, ce qui aboutit à une augmentation des dimensions du clavier et par conséquent du téléphone, ce qui va à l'encontre de la miniaturisation recherchée pour ce type d'appareil, compte tenu du fait qu'il existe une taille minimale pour chaque touche.

De plus, de façon à améliorer la convivialité de l'appareil et augmenter le nombre d'informations présentées à l'utilisateur, il est avantageux d'utiliser un dispositif d'affichage le plus grand possible, sans pour autant augmenter les dimensions du téléphone. Il est ainsi nécessaire de réduire l'encombrement du clavier.

Par conséquent, la solution qui consiste à associer une touche supplémentaire et spécifique à chaque sens de déplacement du curseur n'est pas intéressante.

Le dispositif de commande spécifique du déplacement du curseur peut aussi consister en une "molette" de navigation. Le déplacement du curseur est alors proportionnel à la rotation de la molette.

Lorsque l'appareil électronique est un téléphone mobile, par exemple de type GSM, la molette est avantageusement agencée dans une paroi latérale du téléphone de façon à faciliter son utilisation. Cependant, les molettes de navigation nécessitent un capteur spécifique qui permet de fournir au circuit de commande du dispositif d'affichage une information représentative de la rotation de la molette. De plus, il est nécessaire de prévoir une ouverture supplémentaire dans le boîtier de façon que la molette soit accessible depuis l'extérieur.

Le capteur spécifique à commutateurs multiples, ainsi que la réalisation de l'ouverture supplémentaire, augmentent le coût de fabrication de l'appareil électronique concerné. De plus, l'utilisation d'une molette ne permet généralement le déplacement du curseur que selon une direction, dans les deux sens.

Le dispositif de commande spécifique du déplacement peut encore consister en un organe de pointage aussi appelé "trackball" ou joystick.

Un tel organe de pointage consiste en un levier (joystick) ou en une bille ou boule (trackball). Le curseur se déplace sur l'écran en fonction du déplacement ou de la rotation, ainsi que des sens et de la direction du déplacement ou de la rotation, appliqués au levier ou à la bille respectivement.

De façon similaire à l'utilisation d'une molette, l'organe de pointage nécessite un capteur spécifique onéreux.

Du document Patent Abstracts of Japan vol. 2000, n°4, 31 Août 2000 & JP-2000 032110-A (Hitachi Ltd), 28 Janvier 2000, il est connu q'un téléphone, notamment du type GSM, comporte un dispositif de commande constitué notamment d'un clavier de touches globalement mobiles verticalement de façon indépendante entre une position de repos et une position d'actionnement, dont l'actionnement individuel permet de composer une combinaison de caractères alphanumériques, notamment un numéro d'appel d'un téléphone et un dispositif de commande du déplacement d'un curseur, ou de défilement d'un menu sur un écran d'affichage,
certaines touches de composition sont des touches multifonctions dont l'actionnement selon un premier mode permet de composer, et dont l'actionnement selon un second mode permet de commander le déplacement du curseur.

L'invention est aussi relative à tout appareil comportant un clavier.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un téléphone mobile selon un premier mode de réal isation de l'invention ;
- la figure 2 est une vue en perspective d'un téléphone mobile selon un deuxième mode de réalisation de l'invention ;
- la figure 3 est une vue perspective d'un téléphone mobile selon un troisième mode de réalisation de l'invention, qui représente le téléphone lors de son fonctionnement selon un premier mode d'actionnement de touches multifonctions du clavier ;
- la figure 4 est une vue en perspective d'un téléphone mobile selon un mode de réalisation de l'invention, qui représente le téléphone lors de son fonctionnement selon un second mode d'actionnement de touches multifonctions du clavier.

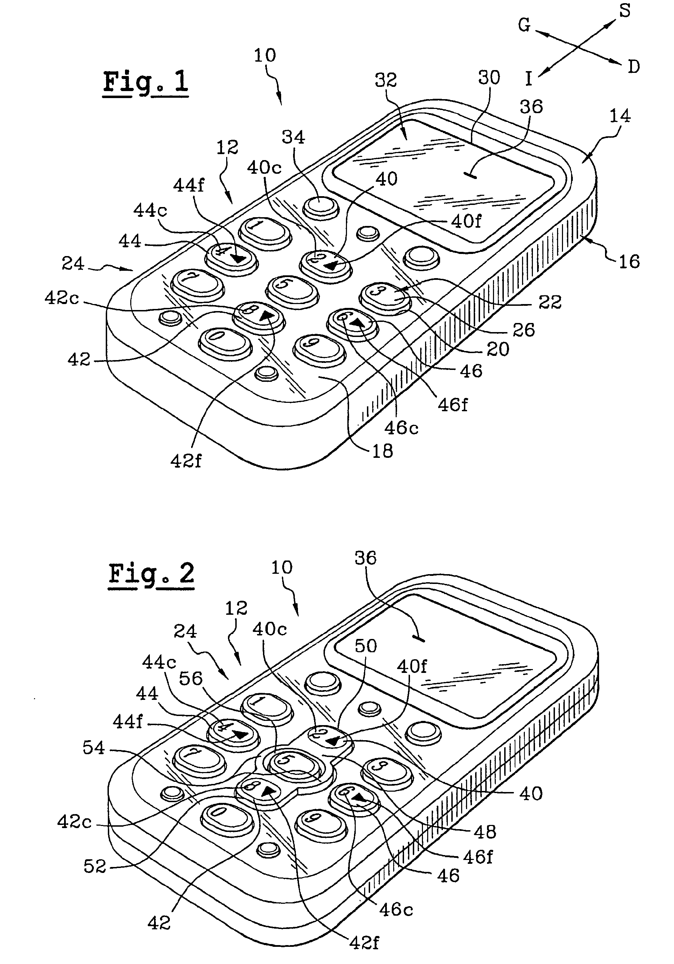

De façon à faciliter la compréhension de la description on utilisera dans la suite une orientation supérieure inférieure et de droite à gauche conformément aux repères (S, I, D, G) représentés sur les figures 1 et 2 et à l'orientation des figures.

La figure 1 représente un téléphone mobile 10 qui peut par exemple être du type GSM.

Le téléphone 10 comporte un boîtier 12 constitué d'une coque supérieure 14 et d'une coque inférieure 16.

La face supérieure 18, ou face avant de la coque supérieure 14, comporte des orifices 20 qui permettent le passage de touches 22 d'un clavier alphanumérique normalisé 24 à dix touches du téléphone 10. Les touches 22 sont mobiles verticalement entre une position haute de repos et une position enfoncée d'actionnement dans laquelle chacune coopère avec un organe de déclenchement d'un commutateur électrique associé (non représenté).

Le clavier 24 est ici constitué de dix touches 22 qui sont réparties en trois séries horizontales de trois touches chacune et une dixième touche, située dans une zone centrale sous la série inférieure.

Le téléphone 10 comporte d'autres touches supplémentaires agencées autour du clavier numérique normalisé 24.

Les touches 22 sont principalement constituées d'une partie supérieure 26 d'actionnement sur laquelle un doigt de l'utilisateur peut appliquer un effort d'actionnement ou de commande. La partie supérieure 26 forme le dos de la touche correspondante.

Les dos des touches 22 des trois séries horizontales du clavier alphanumérique normalisé 24 portent les chiffres de 1 à 9. Le dos de la dixième touche centrale inférieure porte le chiffre 0.

Les touches 22 sont aussi constituées d'une partie inférieure rigide d'actionnement qui est susceptible de coopérer avec l'organe de déclenchement du commutateur électrique associé qui est par exemple un dôme déformable élastiquement.

Lorsque la touche 22 est en position d'actionnement, la partie inférieure déforme le dôme et modifie l'état électrique du circuit électrique de commande associé de façon à commander une fonction de l'appareil électronique 10.

Ainsi, l'actionnement d'une touche supplémentaire 34 située dans la coque supérieure 14 au-dessus du clavier 24 peut permettre de prendre la ligne téléphonique.

La coque supérieure 14 du boîtier 12 de l'appareil électronique 10 comporte aussi une fenêtre 30 qui est traversée par un dispositif ou écran d'affichage 32, tel qu'un écran d'affichage à cristaux liquides, qui est ici sensiblement rectangulaire.

L'actionnement des touches 22 du clavier 24 normalisé permet de composer une combinaison de caractères alphanumériques, notamment un numéro d'appel d'un téléphone et de l'afficher sur l'écran 32.

L'actionnement d'une autre touche du clavier 24 peut encore permettre de déplacer le curseur 34 sur l'écran d'affichage 32 ou de valider une sélection ou une opération réalisée précédemment.

Conformément à l'invention, de façon à minimiser le nombre total de touches 22 du téléphone 10 tout en permettant un usage simple et rapide du téléphone 10, certaines touches du clavier 24 normalisé sont multifonctions, c'est-à-dire que leur actionnement selon un premier mode permet de les utiliser de manière "classique" pour composer une combinaison de caractères alphanumériques, et que leur actionnement selon un second mode permet de commander les déplacements du curseur 36 sur l'écran d'affichage 32.

Ici, conformément aux figures, le téléphone 10 comporte quatre touches multifonctions référencées 40, 42, 44 et 46 de façon à permettre la navigation du curseur 36 selon quatre directions : vers le haut, vers le bas, vers la gauche et vers la droite de l'écran d'affichage 32 respectivement. Ces quatre touches correspondent aux touches de composition des chiffres 2, 8, 4 et 6 respectivement.

L'invention propose aussi que le téléphone 10 comporte des moyens de commande du basculement simultané du changement du mode d'actionnement de toutes les touches multifonctions 40 à 46.

Plusieurs solutions sont alors envisageables. À titre d'exemple non limitatif, les moyens du basculement peuvent consister en l'actionnement d'une touche spécifique du téléphone 10. Cependant, une telle touche spécifique nécessite une augmentation sensible des dimensions du clavier.

Une autre solution consiste à maintenir en position d'actionnement une touche 22 du clavier 24 pendant une durée prolongée supérieure à une durée prédéterminée permettant la composition alphanumérique.

En effet, en général lorsque l'utilisateur désire composer un numéro d'appel d'un téléphone, prendre ou raccrocher la ligne, sélectionner une fonction, etc, la durée moyenne d'actionnement de la touche est inférieure à une première durée. La détermination de la première durée peut être obtenue par des études statistiques ou par apprentissage.

Par conséquent, le maintien prolongé d'une touche 22 en position d'actionnement pendant une durée supérieure à la première durée, peut signifier que l'utilisateur ne désire pas réaliser la fonction principale de composition associée à cette touche. De façon à limiter la possibilité d'une erreur, c'est-à-dire de changer de mode alors que l'utilisateur désire simplement réaliser la fonction principale de composition associée à la touche actionnée, il est avantageux que la durée prédéterminée corresponde à une deuxième durée supérieure à la première durée. La deuxième durée peut par exemple correspondre au double de la première durée.

Les moyens de basculement d'un mode à l'autre peuvent consister en l'actionnement, selon un ordre prédéterminé, de certaines touches 22 du clavier 24.

Par exemple, pour basculer du premier vers le deuxième mode l'utilisateur doit actionner successivement les trois touches 22 de la série horizontale inférieure du clavier 24.

Pour basculer du deuxième vers le premier mode il peut répéter la même opération. Selon une variante, l'utilisateur peut aussi appuyer successivement sur une autre série déterminée de touches.

Pour cette solution, il faut veiller à ce que l'actionnement selon l'ordre prédéterminé de certaines touches 22 du clavier 24 ne commande pas les actions liées à chaque touche 22 actionnée séparément.

Les moyens de basculement d'un mode à l'autre peuvent encore consister en la reconnaissance, par le dispositif de commande, d'un message vocal prédéterminé.

Certains téléphones sont équipés d'un dispositif de reconnaissance vocale. Ainsi, l'émission par l'utilisateur d'un message tel que "changement de mode" peut provoquer le changement de mode. Il est aussi possible que l'utilisateur personnalise son téléphone et choisisse un message particulier permettant le basculement d'un mode à l'autre.

De façon à faciliter la reconnaissance visuelle et l'utilisation des touches multifonctions 40 à 46, la paroi supérieure de leur partie 26 d'actionnement comporte une zone transparente qui représente leur chiffre associé 40c à 46c lors du fonctionnement selon le premier mode de composition ainsi qu'un pictogramme 40f à 46f en forme d'une flèche qui est orientée selon le sens et la direction du déplacement du curseur 36, lorsque chacune d'elle est actionnée selon le second mode de navigation.

De manière connue, les touches 22 du clavier 24 sont éclairées depuis l'intérieur du boîtier par un dispositif non représenté. De façon que l'utilisateur sache immédiatement dans quel mode d'actionnement il se trouve, il est possible que le dispositif d'éclairage éclaire uniquement les chiffres, notamment 40c à 46c, ou les flèches 40f à 46f, selon que le premier ou le deuxième mode d'actionnement des touches est sélectionné.

Ainsi, lorsque le premier mode d'actionnement est sélectionné, l'utilisateur voit les chiffres de "0" à "9" de composition et/ou les triplets normalisés de lettres, associés à ces chiffres, alors que les quatre flèches 40f à 46f des touches multifonctions 40 à 46 sont invisibles car aucune lumière ne traverse la zone de la partie supérieure d'actionnement sur laquelle elles sont représentées.

De façon similaire, lorsque le deuxième mode d'actionnement est sélectionné, l'utilisateur voit uniquement les quatre flèches 40f à 46f des touches multifonctions 40 à 46.

Selon un second exemple de réalisation, représenté à la figure 2 le clavier 24 comporte une paire de touches multifonctions 40, 42 associées.

La paire de touches multifonctions 40, 42 associées permet de commander le déplacement du curseur 36 dans deux sens opposés, ici vers le haut et vers le bas de l'écran de visualisation 32 respectivement.

La paire de touches multifonctions 40, 42 associées consiste ici en un élément allongé 48 d'orientation verticale I-S qui est monté globalement, articulé dans sa partie centrale autour d'un axe A1 horizontal.

Conformément à la figure 2, l'élément allongé 48 est constitué de deux branches 50 et 52 dont chaque extrémité constitue une touche 40 et 42 respectivement. La partie centrale 54 de raccordement des deux branches comporte un trou central 56 pour le passage de la touche 22 qui permet la composition du chiffre "5".

Le basculement de l'élément allongé 48 autour de l'axe A1 permet la mobilité des touches multifonctions 40 et 42 de façon qu'en position d'actionnement elles coopèrent avec les organes de déclenchement des commutateurs électriques associés pour composer un chiffre ou pour déplacer le curseur 36 selon le premier ou le second mode sélectionné d'actionnement des touches multifonctions 40 à 46.

Lorsque les touches multifonctions sont utilisées selon le deuxième mode d'actionnement, l'utilisation de l'élément allongé 48 est intuitive. En effet, le déplacement du doigt de l'utilisateur vers le haut en direction de la touche 40, ou vers le bas en direction de la touche 42, permet le déplacement du curseur 36 sur l'écran 32 dans le même sens.

Selon un troisième mode de réalisation préférée de l'invention, le clavier 24 du téléphone 10 comporte deux paires de touches multifonctions associées qui sont agencées de façon que la direction de l'alignement de haut en bas des deux touches 40 et 42 de la première paire soit sensiblement perpendiculaire à la direction de droite à gauche de l'alignement des deux touches 44 et 46 de la deuxième paire.

Le téléphone 10 comporte ici un clavier 24 normalisé de composition à 10 chiffres. Ainsi, les quatre touches multifonctions 40 à 46 des deux paires sont les touches pour la composition des chiffres pairs "2", "8" et "4", "6".

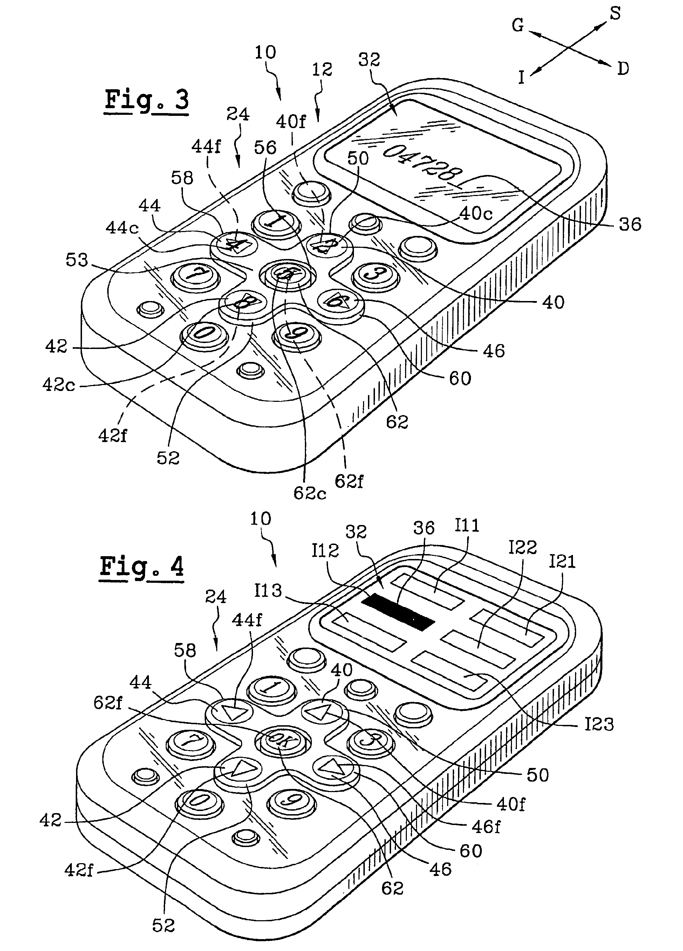

Conformément à la figure 3, les quatre touches multifonctions 40 à 46 des deux paires sont reliées entre elles de façon à former une seule touche 53 en étoile à quatre branches 50, 52, 58 et 60 dont chaque extrémité constitue une touche multifonctions 40 à 46 respectivement.

Le clavier 24 du téléphone 10 comporte avantageusement une cinquième touche multifonctions 62 dont l'actionnement selon le premier mode permet de composer un caractère alphanumérique, et dont l'actionnement selon le deuxième mode permet de commander la validation d'une instruction.

Ici, la cinquième touche multifonctions 62 correspond à la touche 22 qui permet la composition du chiffre "5" lorsque le premier mode de composition est sélectionné. Elle est agencée à l'intersection des directions des alignements de haut en bas et de droite à gauche des deux paires de touches et fait saillie à travers un trou 56.

Ici, le centre de l'étoile comporte un trou central 56 pour le passage de la cinquième touche 62 en vue de permettre l'actionnement indépendant de la touche 53 en étoile et de la cinquième touche 62.

De façon à indiquer à l'utilisateur que la cinquième touche multifonctions 62 permet de valider une instruction, une inscription "OK" apparaît sur son dos lorsqu'elle fonctionne selon le deuxième mode d'actionnement.

La cinquième touche multifonctions 62 peut aussi être réalisée en une seule pièce avec la touche 53 en étoile. Dans ce cas, l'actionnement de la partie centrale de la touche 53 permet le déclenchement du commutateur électrique associé à la cinquième touche multifonctions 62 pour commander la validation d'une instruction.

On a représenté aux figures 3 et 4 le téléphone 10 selon les deux modes d'actionnement des touches multifonctions 40 à 46 et 62. Le téléphone 10 est ici équipé d'un dispositif d'éclairage des touches qui permet d'éclairer les chiffres de "0" à "9" ou la flèche 40f à 46f (ou l'inscription "OK" pour la touche 62 référencée 62f) selon le mode d'actionnement.

Ainsi, le téléphone 10 représenté à la figure 3 fonctionne selon le premier mode d'actionnement des touches multifonctions. Par conséquent, seuls les chiffres de "0" à "9" du clavier 24 sont visibles. Les flèches 40f à 46f et l'inscription OK 62f représentées en trait fin ne sont pas visibles par l'utilisateur.

Par contre, le téléphone 10 représenté sur la figure 4 fonctionne selon le deuxième mode d'actionnement des touches multifonctions du clavier alphanumérique 24. Les chiffres pairs 40c à 46c ainsi que le chiffre "5" 62c ont disparu, seules les flèches 40f à 46f représentant la direction de déplacement du curseur 36 ainsi que l'inscription OK 62f sont visibles.

L'éclairage des chiffres 40c à 46c et 62c ou des flèches 40f à 46f et de l'inscription OK 62f des touches multifonctions 40 à 46, selon que le premier ou le second mode d'actionnement est sélectionné respectivement, peut être obtenu par un dispositif d'éclairage à lumière polarisée.

La description de cet exemple va être faite uniquement pour les touches multifonctions 40 à 46 de la touche 53 en étoile. L'éclairage de la cinquième touche multifonctions 62 est avantageusement réalisée de façon similaire.

Le dispositif d'éclairage de chaque touche 40 à 46 comporte alors deux filtres et deux sources de lumière polarisée émettant chacune selon une direction perpendiculaire. Les deux filtres sont agencés l'un à côté de l'autre dans un plan sensiblement parallèle au dos de la touche. Le premier filtre permet le passage de la lumière émise par la première source et filtre la lumière émise par la seconde. De façon inverse, le second filtre permet le passage de la lumière émise par la seconde source et filtre la lumière émise par la première.

Chaque touche 40 à 46 comporte un premier et un second film dont chacun comporte une première et une seconde zone transparente qui représente un chiffre 40c à 46c ou une flèche 40f à 46f respectivement.

Les deux films sont agencés en vis-à-vis du premier et du second filtre respectivement.

Ainsi, lorsque le premier mode de composition est sélectionné la première source émet une lumière polarisée qui traverse le premier filtre ainsi que la première zone transparente du premier film. L'image du chiffre représenté sur le premier film est alors projetée sur le dos de la touche permettant ainsi à l'utilisateur de voir le chiffre.

Selon ce premier mode, la lumière polarisée émise par la première source est filtrée, c'est-à-dire bloquée, par le second filtre empêchant la lumière de traverser la seconde zone transparente représentant une flèche du second film de façon que la flèche, qui n'est pas traversée par la lumière, ne soit pas visible par l'utilisateur.

Lorsque le deuxième mode est sélectionné la seconde source émet lumière polarisée et, de façon similaire au premier mode, permet à l'utilisateur de voir la flèche du second film. Une touche de ce type est décrite plus particulièrement en détail dans le brevet WO-A-98.01876.

Cette solution est avantageuse. En effet, la projection du chiffre 40c à 46c et de la flèche 40f à 46f d'une touche multifonctions 40 à 46 peut être réalisée dans une zone unique du dos de la touche correspondante. La dimension nécessaire pour permettre la visualisation du chiffre et de la flèche est réduite. Cela permet, en conservant les mêmes dimensions des touches multifonctions 40 à 46, d'augmenter la taille des chiffres ou des flèches de façon à augmenter leur visibilité.

Un tel dispositif d'éclairage peut aussi permettre de diminuer les dimensions des touches 40 à 46. Il est ainsi possible de diminuer les dimensions du clavier 24 et/ou d'augmenter le nombre de touches pour faciliter l'utilisation des fonctions du téléphone 10.

Cela permet d'utiliser une touche présentant une section circulaire, les dimensions maximales du chiffre et de la flèche étant légèrement inférieures au diamètre de la touche correspondante.

Le dispositif d'éclairage à lumière polarisée précédemment décrit peut être généralisé à d'autres touches multifonctions du téléphone pour permettre de diminuer encore les dimensions du téléphone 10.

La touche en étoile 53 est ergonomique. De plus, l'utilisation du téléphone 10 selon l'invention, est intuitive. En effet, lorsque l'utilisateur tient le téléphone 10 dans une main il peut composer une combinaison de chiffres et/ou de lettres ou naviguer sur l'écran 32 et valider des instructions par de simples mouvements de glissement du pouce, de la même main, sur la touche 53 en étoile et la cinquième touche multifonctions 62.

Par exemple, lorsque le téléphone fonctionne selon le deuxième mode d'actionnement des touches multifonctions et lorsque l'écran de visualisation 32 présente une liste d'instructions I11, I12, I13, I21... dans laquelle l'utilisateur doit en sélectionner une, le curseur 36 peut occuper autant de positions qu'il y a d'instructions.

Ici, les instructions I11, I12, I13, I21... sont agencées, conformément à la figure 4, en deux colonnes de trois instructions et le curseur 36 consiste en une zone grisée qui est ici sur l'instruction I12 située à la deuxième ligne de la première colonne.

Si l'utilisateur veut sélectionner cette instruction il lui suffit d'actionner la cinquième touche multifonctions 62.

S'il désire sélectionner une autre instruction I12 il doit déplacer le curseur 36 à l'aide des touches multifonctions 40 à 46 de la touche 53 en étoile, puis valider sa sélection en actionnant la cinquième touche multifonctions 62.

## Revendications

1. Téléphone du type GSM, qui comporte un dispositif de commande constitué notamment d'un clavier de touches mobiles de façon indépendante entre une position de repos et une position d'actionnement, selon une direction sensiblement perpendiculaire à sa surface, l'actionnement individuel des touches permettant de composer une combinaison de caractères alphanumériques, notamment un numéro d'appel de téléphone, ou de commander le déplacement d'un curseur ou le défilement d'un menu sur un écran d'affichage, le clavier comportant au moins deux paires de touches associées multifonctions (40, 42, 44, 46) qui permettent de commander le déplacement du curseur (36),
**caractérisé en ce que** les quatre touches multifonctions (40, 42, 44, 46) des deux paires sont reliées entre elles de façon à former une étoile (53) à quatre branches (50, 52, 58, 60) dont chaque extrémité constitue une touche (40, 42, 44, 46).

2. Téléphone (10) selon la revendication précédente, **caractérisé en ce que** les deux paires de touches multifonctions associées sont agencées de façon que la direction de l'alignement des deux touches (40, 42) de la première paire soit sensiblement perpendiculaire à la direction de l'alignement des deux touches (44, 46) de la deuxième paire, pour déplacer le curseur selon une direction donnée par l'alignement des touches.

3. Téléphone (10) selon la revendication 1 ou 2, **caractérisé en ce que** les quatre touches multifonctions (40, 42, 44, 46) des deux paires sont des touches pour la composition des chiffres pairs d'un clavier (24) normalisé de composition à dix chiffres.

4. Téléphone (10) selon l'une quelconque des revendications 1 à 3, **caractérisé en ce que** le clavier (24) comporte au moins une cinquième touche multifonctions (62) dont l'actionnement selon un premier mode permet de composer, et dont l'actionnement selon un second mode permet de commander la validation d'une instruction.

5. Téléphone (10) selon la revendication précédente, **caractérisé en ce que** la cinquième touche (62) est agencée sensiblement à l'intersection des directions des alignements des deux paires de touches (40, 42, 44, 46).

6. Téléphone (10) selon l'une des revendications précédentes, **caractérisé en ce que** le centre de l'étoile (53) comporte un trou central (56) pour le passage de la cinquième touche (62) en vue de permettre l'actionnement indépendant de l'étoile (53) et de la cinquième touche (62).

7. Téléphone (10) selon l'une quelconque des revendications précédentes, **caractérisé en ce qu**'il comporte des moyens de commande du basculement simultané du changement de mode d'actionnement desdites touches multifonctions.

8. Téléphone (10) selon la revendication précédente, **caractérisé en ce que** les moyens de commande du basculement d'un mode à l'autre consistent en la reconnaissance d'un message vocal prédéterminé par le dispositif de commande.

9. Téléphone (10) selon la revendication 7, **caractérisé en ce que** les moyens de commande du basculement d'un mode à l'autre consistent en le maintien en position d'actionnement d'une touche (22) du clavier (24) de commande pendant une durée supérieure à une durée prédéterminée.

10. Téléphone (10) selon la revendication 7, **caractérisé en ce que** les moyens de commande du basculement d'un mode à l'autre consistent en l'actionnement selon un ordre prédéterminé de certaines touches (22) du clavier (24).

11. Téléphone (10) selon la revendication 7, **caractérisé en ce que** les moyens de commande du basculement d'un mode à l'autre consistent en l'actionnement d'une touche (22) spécifique du clavier (24).

12. Appareil comportant un dispositif de commande constitué notamment d'un clavier (24) de touches mobiles de façon indépendante entre une position de repos et une position d'actionnement, selon une direction sensiblement perpendiculaire à sa surface, l'actionnement individuel des touches permettant de composer une combinaison de caractères alphanumériques, notamment un numéro d'appel de téléphone, ou de commander le déplacement d'un curseur ou le défilement d'un menu sur un écran d'affichage, le clavier comportant au moins deux paires de touches associées multifonctions (40, 42, 44, 46) qui permettent de commander le déplacement du curseur (36),
**caractérisé en ce que** les quatre touches multifonctions (40, 42, 44, 46) des deux paires sont reliées entre elles de façon à former une étoile (53) à quatre branches (50, 52, 58, 60) dont chaque extrémité constitue une touche (40, 42, 44, 46).

## Claims

1. A GSM-type telephone which comprises a control device consisting notably of a keypad with keys able to move in an independent fashion between an idle position and an actuation position in a direction substantially at an angle of 90 degrees to its surface, the individual actuation movement of the keys allowing to dial a combination of alphanumeric characters, notably a telephone number, or to control the movement of a cursor or the scrolling of a menu on a display panel, the keypad comprising at least two pairs of associated multifunction keys (40, 42, 44, 46) which allow to control the movement of the cursor (36),
**characterized in that** the four multifunction keys (40, 42, 44, 46) of the two pairs are interconnected so as form a four-armed (50, 52, 58, 60) star (53) of which each end forms a key (40, 42, 44, 46).

2. A telephone (10) as claimed in the preceding claim, **characterized in that** the two pairs of associated multifunction keys are arranged so that the direction of alignment of the two keys (40, 42) in the first pair is substantially at an angle of 90 degrees to the direction of alignment of the two keys (44, 46) in the second pair, to move the cursor in a direction that is given by the alignment of the keys.

3. A telephone (10) as claimed in claim 1 or 2, **characterized in that** the four multifunction keys (40, 42, 44, 46) in the two pairs are keys for dialing even digits on a standard 10-digit dialing keypad (24).

4. A telephone (10) as claimed in any one of claims 1 to 3, **characterized in that** the keypad (24) has at least a fifth multifunction key (62) whose actuation according to a first mode makes it possible to dial, and whose actuation according to a second mode makes it possible to demand the validation of an instruction.

5. A telephone (10) as claimed in the preceding claim, **characterized in that** the fifth key (62) is arranged substantially at the intersection of the axes of the alignments of the two pairs of keys (40, 42, 44, 46).

6. A telephone (10) as claimed in any one of the preceding claims, **characterized in that** the center of the star (53) has a central hole (56) for the fifth key (62) to pass through with a view to allowing the independent actuation of the star (53) and the fifth key (62).

7. A telephone (10) as claimed in any one of the preceding claims, **characterized in that** the telephone has means for controlling the simultaneous switching of the change in actuation mode of said multifunction keys.

8. A telephone (10) as claimed in the preceding claim, **characterized in that** the means for controlling the switching from one mode to another consist of the recognition of a predetermined voice message by the control device.

9. A telephone (10) as claimed in claim 7, **characterized in that** the means for controlling the switching from one mode to another consist of holding a key (22) on the control keypad (24) in the actuation position for a period longer than a predetermined period.

10. A telephone (10) as claimed in claim 7, **characterized in that** the means for controlling the switching from one mode to another consist of actuating certain keys (22) on the keypad (24) in a predetermined order.

11. A telephone (10) as claimed in claim 7, **characterized in that** the means for controlling the switching from one mode to another consist of actuating a specific key (22) on the keypad (24).

12. Apparatus, which has a control device consisting notably of a keypad (24) with keys (22) able to move in an independent fashion between an idle position and an actuation position in a direction substantially at an angle of 90 degrees to its surface, the individual actuation movement of the keys allowing to dial a combination of alphanumeric characters, notably a telephone number, or to control the movement of a cursor or the scrolling of a menu on a display panel, the keypad comprising at least two pairs of associated multifunction keys (40, 42, 44, 46) which allow to control the movement of the cursor (36),
**characterized in that** the four multifunction keys (40, 42, 44, 46) of the two pairs are interconnected so as form a four-armed (50, 52, 58, 60) star (53) of which each end forms a key (40, 42, 44, 46).

## Patentansprüche

1. Mobilofon vom Typ GSM, das eine Steuervorrichtung enthält, insbesondere aus einer mobilen Tastatur gebildet, mit voneinander unabhängigen Tasten zwischen einer Ruheposition und einer Betätigungsposition entsprechend einer zu ihrer Fläche weitgehend rechtwinkligen Richtung, wobei die einzelne Betätigung der Tasten die Auswahl einer alphanumerischen Zeichenfolge, insbesondere die Rufnummer eines Mobilofons, oder das Steuern der Bewegung eines Cursors oder das Durchlaufen eines Menüs auf einem Anzeigebildschirm ermöglicht, wobei die Tastatur mindestens zwei verbundene Multifunktions-Tastenpaare hat (40, 42, 44, 46), die das Steuern der Bewegung des Cursors ermöglichen (36),
**dadurch gekennzeichnet, dass** die vier Multifunktionstasten (40, 42, 44, 46) der zwei Paare miteinander verbunden sind, um einen Stern (53) mit vier Zacken (50, 52, 58, 60) zu bilden, von denen jedes Ende eine Taste bildet (40, 42, 44, 46).

2. Mobilofon (10) nach dem vorhergehenden Anspruch, **dadurch gekennzeichnet, dass** die zwei Paare der verbundenen Multifunktionstasten so angeordnet sind, damit die Ausrichtung der zwei Tasten (40, 42) des ersten Paars weitgehend rechtwinklig zur Ausrichtung der zwei Tasten (44, 46) des zweiten Paars ist, um den Cursor durch Ausrichtung der Tasten entsprechend einer bestimmten Richtung zu bewegen.

3. Mobilofon (10) nach Anspruch 1 oder 2, **dadurch gekennzeichnet, dass** die vier Multifunktionstasten (40, 42, 44, 46) der zwei Paare die Tasten für die Auswahl der geraden Zahlen aus einer Standardtastatur (24) zur Auswahl von zehn Zahlen sind.

4. Mobilofon (10) entsprechend einem beliebigen der Ansprüche 1 bis 3, **dadurch gekennzeichnet, dass** die Tastatur (24) mindestens eine fünfte Multifunktionstaste (62) enthält, deren Betätigung entsprechend einem ersten Modus die Auswahl ermöglicht und deren Betätigung entsprechend einem zweiten Modus das Steuern der Bestätigung einer Anweisung ermöglicht.

5. Mobilofon (10) nach dem vorhergehenden Anspruch, **dadurch gekennzeichnet, dass** die fünfte Taste (62) weitgehend am Schnittpunkt der Ausrichtungen der zwei Tastenpaare (40, 42, 44, 46) angeordnet ist.

6. Mobilofon (10) nach einem der vorhergehenden Ansprüche, **dadurch gekennzeichnet, dass** die Sternmitte (53) ein Mittelloch (56) für den Durchgang der fünften Taste (62) enthält, um die unabhängige Betätigung des Sterns (53) und der fünften Taste (62) zu ermöglichen.

7. Mobilofon (10) entsprechend einem beliebigen der vorhergehenden Ansprüche, **dadurch gekennzeichnet, dass** es Steuermittel für das gleichzeitige Umschalten für den Wechsel des Betätigungsmodus der besagten Multifunktionstasten enthält.

8. Mobilofon (10) nach dem vorhergehenden Anspruch, **dadurch gekennzeichnet, dass** die Steuermittel für das Umschalten von einem Modus in den anderen in der Erkennung einer vorbestimmten Sprachnachricht durch die Steuervorrichtung bestehen.

9. Mobilofon (10) nach Anspruch 7, **dadurch gekennzeichnet, dass** die Steuermittel für das Umschalten von einem Modus in den anderen im Erhalt der Betätigungsposition einer Taste (22) der Steuertastatur (24) während einer längeren Dauer als einer vorbestimmten Dauer bestehen.

10. Mobilofon (10) nach Anspruch 7, **dadurch gekennzeichnet, dass** die Steuermittel für das Umschalten von einem Modus in den anderen in der Betätigung entsprechend einer vorbestimmten Reihenfolge mancher Tasten (22) der Tastatur (24) bestehen.

11. Mobilofon (10) nach Anspruch 7, **dadurch gekennzeichnet, dass** die Steuermittel für das Umschalten von einem Modus in den anderen in der Betätigung einer spezifischen Taste (22) der Tastatur (24) bestehen.

12. Gerät mit einer Steuervorrichtung, insbesondere aus einer Tastatur (24) gebildet, mit voneinander unabhängigen mobilen Tasten zwischen einer Ruheposition und einer Betätigungsposition entsprechend einer zu ihrer Fläche weitgehend rechtwinkligen Richtung, wobei die einzelne Betätigung der Tasten die Auswahl einer alphanumerischen Zeichenfolge, insbesondere die Rufnummer eines Mobilofons, oder das Steuern der Bewegung eines Cursors oder das Durchlaufen eines Menüs auf einem Anzeigebildschirm ermöglicht, wobei die Tastatur mindestens zwei verbundene Multifunktions-Tastenpaare hat (40, 42, 44, 46), die das Steuern der Bewegung des Cursors (36) ermöglichen,
**dadurch gekennzeichnet, dass** die vier Multifunktionstasten (40, 42, 44, 46) der zwei Paare miteinander verbunden sind, um einen Stern (53) mit vier Zacken (50, 52, 58, 60) zu bilden, von denen jedes Ende eine Taste bildet (40, 42, 44, 46).
